# EUROPÄISCHE PATENTSCHRIFT

(11) **EP 1 052 750 B1**
(45) Veröffentlichungstag und Bekanntmachung des Hinweises auf die Patenterteilung: **16.01.2002**
(21) Anmeldenummer: 00108621.4
(22) Anmeldetag: 20.04.2000
(51) Int. Cl.: H02G 3/04, E04F 19/04

(54) **Leitungsführungskanal**
Cable duct
Conduite de câbles

(30) Priorität: 04.05.1999 DE 29907889 U
(43) Veröffentlichungstag der Anmeldung: 15.11.2000
(73) Patentinhaber: Tehalit GmbH & Co. KG, 67716 Heltersberg (DE)
(72) Erfinder: Schmitt, Dieter, Dipl.-Ing. Elektrotechnik, 66440 Altheim (DE); Eberle, Patrick, Dipl.-Ing. Elektrotechnik, 66292 Riegelsberg (DE); Klöckner, Oliver,Staatl.gepr.Automatisierungstech., 66976 Rodalben (DE)
(74) Vertreter: Patentanwälte Möll und Bitterich

(56) Entgegenhaltungen:
- EP-A- 0 800 250
- DE-A- 2 129 574

## Beschreibung

Die Erfindung betrifft Leitungsführungskanäle für die Montage in den Ecken von Räumen gemäß dem Oberbegriff des Anspruchs 1.

Leitungsführungskanäle haben die Aufgabe, die Verlegung von Elektroleitungen und Rohrleitungen einfach, sicher und ästhetisch ansprechend zu ermöglichen. Leitungsführungskanäle sind seit über 100 Jahren bekannt und weltweit in großen Stückzahlen in Gebrauch.

Während die weitaus überwiegende Anzahl der Leitungsführungskanäle einen rechteckigen Querschnitt besitzt, gibt es speziell für die Verlegung in Raumecken auch Leitungsführungskanäle, deren Unterteil einen in etwa V-förmigen Querschnitt besitzt. Man vergleiche beispielsweise die DE-C 196 44 406.

Unglücklicherweise schließen die Gebäudewände in Raumecken nur selten einen Winkel von exakt 90° ein. Das hat zur Folge, dass der gegenseitige Abstand der üblichen Verschlussprofile, die der lösbaren Befestigung des Kanaldeckels dienen, größer oder kleiner ist als der Sollwert. Dadurch kann es passieren, dass der Deckel schlecht hält oder gar nicht aufgesetzt werden kann. Das ist unbefriedigend.

Der vorliegenden Erfindung liegt daher die Aufgabe zugrunde, einen Leitungsführungskanal für die Montage in Raumecken anzugeben, dessen Deckel sich in allen Fällen problemlos aufsetzen und abnehmen lässt.

Diese Aufgabe wird gelöst durch einen Leitungsführungskanal mit den Merkmalen des Anspruchs 1.

Die vorliegende Erfindung verwendet nur eine einzige, zentrale Rastverbindung zwischen Kanalunterteil und Deckel. Dadurch sitzt der Deckel auch bei größeren Abweichungen des Raumeckenwinkels immer fest und lässt sich jederzeit wieder abnehmen.

Gemäß einer vorteilhaften Weiterbildung der Erfindung ist die Rastleiste fein gezahnt. In Verbindung mit vorteilhaften dreieckigen Leisten an den der Rastleiste zugewandten Oberflächen der Rastöffnung lässt sich die Rastleiste mehr oder weniger tief in die Rastöffnung hineinschieben, so dass auch bei größeren Abweichungen der Deckel immer mit dem Kanalunterteil abschließt

Vorzugsweise wird die Rastöffnung gebildet durch zwei federnde, parallele Zungen.

Gemäß einer Weiterbildung der Erfindung besitzt der Deckel neben der Rastleiste wenigstens eine Biegenut. Auch dieses Konstruktionsdetail dient dazu, dass die Seitenkanten des Deckels stets flach auf dem Kanalunterteil aufliegen.

Vorzugsweise sind die Seitenkanten des Deckels eingezogen und übergreifen das Kanalunterteil. Dieses Konstruktionsdetails hat zunächst die Aufgabe, dafür zu sorgen, dass der Deckel das Kanalunterteil gut verschließt. Gleichzeitig entsteht zwischen Deckel und Raumwand eine ästhetisch ansprechende Schattenfuge.

Gemäß einer vorteilhaften Ausgestaltung der Erfindung sind an den freien Kanten der Seitenwände des Kanalunterteils Klammem angeformt, die an der Mitteltrennwand lösbar befestigt werden können. Diese Klammem verhindern das Herausfallen von bereits verlegten Leitungen, erlauben jedoch bei Bedarf das nachträgliche Einlegen oder Herausnehmen von Leitungen.

Anhand der Zeichnung soll die Erfindung in Form eines Ausführungsbeispiels näher erläutert werden. Es zeigen
- Fig. 1: einen Querschnitt durch einen in einer Raumecke verlegten Leitungsführungskanal und
- Fig. 2: eine Draufsicht auf den Leitungsführungskanal der Fig. 1 bei abgenommenem Deckel.

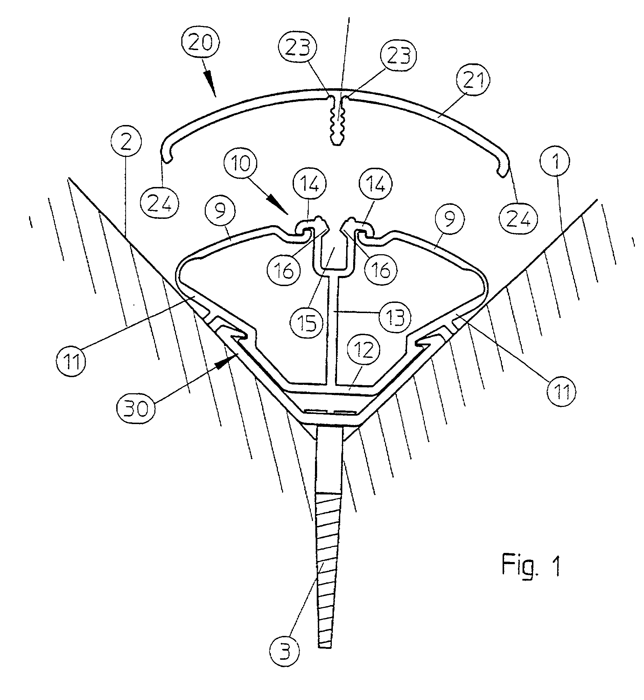

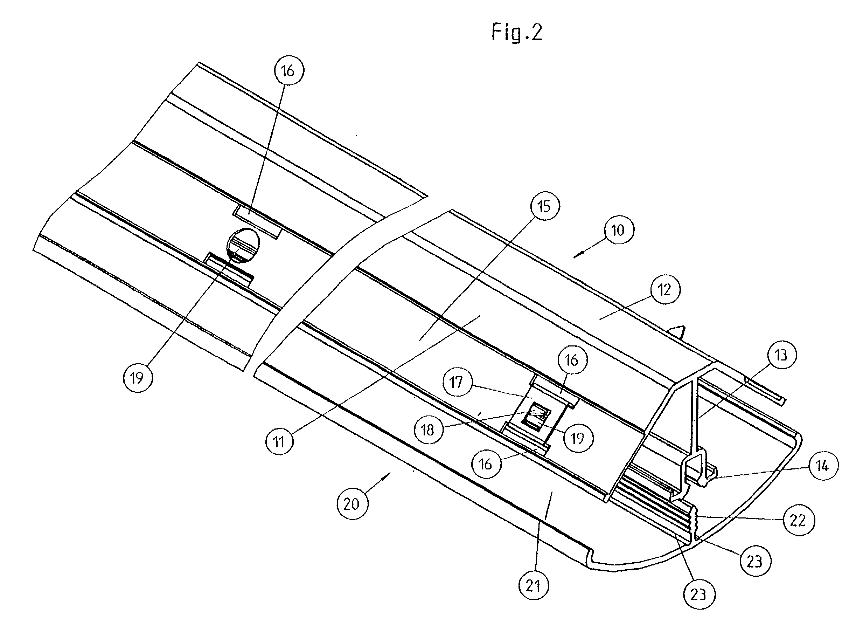

Fig. 1 als Querschnitt und Fig. 2 als Draufsicht zeigen in einer von zwei Raumwänden 1, 2 gebildeten Raumecke verlegten Leitungsführungskanal, bestehend aus einem Kanalunterteil 10 und einem daran lösbar befestigbaren Deckel 20. Zur Befestigung des Kanalunterteils 10 sind beispielhaft Klammern 30 vorgesehen, die, wie an sich bekannt, mittels Schrauben 3 an der Raumwand befestigt werden und auf die das Kanalunterteil 10 aufgerastet wird.

Das Kanalunterteil 10 besteht aus einem Boden 12 und zwei Seitenwänden 11, die untereinander einen Winkel von etwa 90° einschließen. Vom Boden 12 geht eine Mitteltrennwand 13 aus, die an ihrem freien Ende eine Rastöffnung 15 trägt, gebildet durch zwei parallele federnde Zungen 14. An den freien Enden der Seitenwände 11 sind gegenseitig beabstandet Klammern 9 einstückig angeformt, die an der Mitteltrennwand 13 bzw. den Zungen 14 lösbar verhakt sind.

Oberhalb des Kanalunterteils 10 erkennt man einen passenden Deckel 20. Dieser besitzt eine gewölbte Deckelfläche 21, an deren Innenseite eine Rastleiste 22 angebracht ist. Die Seitenkanten 24 des Deckels 20 sind eingezogen und übergreifen das Kanalunterteil 10.

Die Oberflächen der Rastleiste 22 sind fein gezahnt. Die korrespondierenden Oberflächen der Zungen 14 tragen je eine dreieckige Leiste 16. Auf diese Weise kann die Rastleiste 22 mehr oder weniger tief eingedrückt werden und sitzt in allen Fällen gleich fest.

Neben der Rastleiste 22 erkennt man Biegenuten 23. Diese erlauben eine elastische Verformung der Deckelfläche 21, falls dies wegen Abweichungen der Raumecke 1, 2 von der Idealform einmal erforderlich werden sollte.

## Patentansprüche

1. Leitungsführungskanal für die Montage in den Ecken von Räumen, im wesentlichen umfassend
- ein Kanalunterteil (10) mit
-- etwa V-förmigem Querschnitt,
-- zwei Seitenwänden (11) und
-- einem Boden (12)
- und einen Deckel (20) der lösbar auf das Kanalunterteil (10) aufsetzbar ist, **gekennzeichnet durch** die Merkmale:
- das Kanalunterteil (10) besitzt eine Mitteltrennwand (13),
- die Trennwand (13) besitzt an ihrem freien Ende eine Rastöffnung (15)
- der Deckel (20) besitzt an seiner Innenseite eine damit korrespondierende Rastleiste (22).

2. Leitungsführungskanal nach Anspruch 1, **gekennzeichnet durch** das Merkmal:
- die Rastleiste (22) ist fein gezahnt.

3. Leitungsführungskanal nach Anspruch 1 oder 2, **gekennzeichnet durch** das Merkmal:
- die Rastöffnung (15) wird gebildet **durch** zwei federnde Zungen (14).

4. Leitungsführungskanal nach Anspruch 2 oder 3, **gekennzeichnet durch** das Merkmal:
- die Rastöffnung (15) besitzt an ihren der Rastleiste (15) zugewandten Oberflächen dreieckige Leisten (16).

5. Leitungsführungskanal nach einem der Ansprüche 1 bis 4, **gekennzeichnet durch** das Merkmal:
- der Deckel (20) besitzt neben der Rastleiste (22) wenigstens eine Biegenut (23).

6. Leitungsführungskanal nach einem der Ansprüche 1 bis 5, **gekennzeichnet durch** das Merkmal:
- die Seitenkanten (24) des Deckels (20) sind eingezogen und übergreifen das Kanalunterteil (10).

7. Leitungsführungskanal nach einem der Ansprüche 1 bis 6, **gekennzeichnet durch** die Merkmale:
- an den freien Kanten der Seitenwände (11) des Kanalunterteils (10)
sind Klammem (9) angeformt,
- die Klammem (9) sind an der Mitteltrennwand (13, 14) lösbar zu befestigen.

## Claims

1. Wiring trunking for assembly in the corners of rooms, essentially comprising
- a trunking lower part (10) with
- - an approximately V-shaped cross section,
- - two side walls (11) and
- - a bottom (12)
- and a cover (20), which can be mounted in a removable manner on the trunking lower part (10),
**characterised by** the features:
- the trunking lower part (10) has a centre partition (13),
- the partition (13) has a locking opening (15) at its free end,
- the cover (20) has a locking strip (22), corresponding with the opening (15), on its inside.

2. Wiring trunking according to Claim 1, **characterised by** the feature:
- the locking strip (22) is finely serrated.

3. Wiring trunking according to Claim 1 or 2, **characterised by** the feature:
- the locking opening (15) is formed by two resilient tongues (14).

4. Wiring trunking according to Claim 2 or 3, **characterised by** the feature:
- the locking opening (15) has triangular strips (16) at its surfaces which face the locking strip (15).

5. Wiring trunking according to any one of Claims 1 to 4,
**characterised by** the feature:
- the cover (20) has at least one bending groove (23) next to the locking strip (22).

6. Wiring trunking according to any one of Claims 1 to 5, **characterised by** the feature:
- the side edges (24) of the cover (20) are drawn in and engage over the trunking lower part (10).

7. Wiring trunking according to any one of Claims 1 to 6, **characterised by** the features:
- clamps (9) are moulded onto the free edges of the side walls (11) of the trunking lower part (10),
- the clamps (9) can be fastened to the centre partition (13, 14) in a removable manner.

## Revendications

1. Gaine de câblage pour le montage dans les angles de pièces, comprenant sensiblement
- une partie inférieure de la gaine (10) avec
-- une section transversale approximativement en forme de V,
-- deux parois latérales (11) et
-- un fond (12)
- et un couvercle (20) qui peut se poser amovible sur la partie inférieure de la gaine (10), **caractérisée par** les particularités suivantes:
- la partie inférieure de la gaine (10) possède une paroi de séparation centrale (13),
- la paroi de séparation (13) possède une ouverture d'encliquetage (15) à son extrémité libre,
- le couvercle (20) possède sur sa face intérieure une barre d'encliquetage (22) qui y correspond.

2. Gaine de câblage selon la revendication 1, **caractérisée par** la particularité suivante:
- la barre d'encliquetage (22) est finement dentée.

3. Gaine de câblage selon la revendication 1 ou 2, **caractérisée par** la particularité suivante:
- l'ouverture d'encliquetage (15) est formée par deux languettes à ressorts (14).

4. Gaine de câblage selon la revendication 2 ou 3, **caractérisée par** la particularité suivante:
- l'ouverture d'encliquetage (15) possède sur ses surfaces tournées vers la barre d'encliquetage (15) des barres triangulaires (16).

5. Gaine de câblage selon l'une des revendications 1 à 4, **caractérisée par** la particularité suivante:
- le couvercle (20) possède outre la barre d'encliquetage (22) au moins une gorge de pliage (23).

6. Gaine de câblage selon l'une des revendications 1 à 5, **caractérisée par** la particularité suivante:
- les bords latéraux (24) du couvercle (20) sont remontés et recouvrent la partie inférieure de la gaine (10).

7. Gaine de câblage selon l'une des revendications 1 à 6, **caractérisée par** la particularité suivante:
- sur les bords libres des parois latérales (11) de la partie inférieure de la gaine (10) sont formées des brides de fixation (9),
- les brides de fixation (9) doivent être fixées amovibles sur la paroi de séparation centrale (13, 14).
